# EUROPÄISCHE PATENTSCHRIFT

(11) **EP 3 453 579 B1**
(45) Veröffentlichungstag und Bekanntmachung des Hinweises auf die Patenterteilung: **28.02.2024**
(21) Anmeldenummer: 18183354.2
(22) Anmeldetag: 13.07.2018
(51) Int. Cl.: B60R 25/021

(54) **VERRIEGELUNGSVORRICHTUNG**
LOCKING DEVICE
DISPOSITIF DE VERROUILLAGE

(30) Priorität: 07.09.2017 DE 102017120690
(43) Veröffentlichungstag der Anmeldung: 13.03.2019
(73) Patentinhaber: HUF Hülsbeck & Fürst GmbH & Co. KG, 42551 Velbert (DE)
(72) Erfinder: GEURDEN, Armin, 47929 Grefrath (DE); ALVES, Robson Amorin, 13253-600 Itatiba (Sao Paulo) (BR)
(74) Vertreter: Bals & Vogel Patentanwälte PartGmbB

(56) Entgegenhaltungen:
- DE-A1- 2 410 909
- DE-A1-102015 108 664
- DE-C1- 10 119 267
- US-A1- 2003 079 509

## Beschreibung

Die Erfindung betrifft eine Verriegelungsvorrichtung zum Verriegeln eines funktionswesentlichen Bauteils, insbesondere einer Lenksäule oder eines Gangschalthebels, eines Fahrzeuges nach dem Oberbegriff des unabhängigen Anspruches.

Bei bekannten Verriegelungsvorrichtungen von funktionswesentlichen Bauteilen, wie z. B. von Lenksäulen oder Gangschalthebeln, in Fahrzeugen werden oft Schließzylinder benutzt, um das funktionswesentliche Bauteil nach dem Abstellen des Fahrzeuges zu verriegeln. Die Verriegelungsvorrichtungen können somit als Sicherung gegen unbefugte Benutzung des Fahrzeuges dienen. Eine bekannte Verriegelungsvorrichtung ist in der Druckschrift DE 101 19 267 C1 beschrieben. Zurzeit besteht das Problem, dass der Schließzylinder in zwei unterschiedlichen Drehpositionen innerhalb eines Gehäuses der Verriegelungsvorrichtungen montiert werden kann, wobei jedoch der Schließzylinder selbst nicht vollständig rotationssymmetrisch aufgebaut ist, sodass Elemente des Schließzylinders, insbesondere eines im Schließzylinder integrierten Sperrbolzenrückhaltesystems, je nach Drehstellung des montierten Schließzylinders einem höheren mechanischen Verschleiß unterliegen. In einer falschen Position des Schließzylinders kann bspw. ein Mitnehmer für die Schlüsselabzugssicherung, der üblicherweise aus Kunststoff ausgebildet und von dem eingeführten Schlüssel mechanisch betätigt bzw. verschoben wird, stärker beansprucht werden, wodurch das Sperrbolzenrückhaltesystem in seiner Funktion gestört werden kann.

Der Erfindung liegt daher eine Aufgabe zugrunde, mindestens einen aus dem Stand der Technik bekannten Nachteil bei Verriegelungsvorrichtungen eins funktionswesentlichen Bauteils, insbesondere einer Lenksäule oder eines Gangschalthebels, eines Fahrzeuges zumindest zum Teil zu überwinden. Insbesondere ist es eine Aufgabe der vorliegenden Erfindung eine Verriegelungsvorrichtung zu schaffen, welche eine richtige Montage eines Schließzylinders innerhalb eines Gehäuses der Verriegelungsvorrichtung ermöglicht. Vorzugsweise soll ein Monteur bei der Montage unterstützt bzw. entlastet werden, um die richtige Position des Schließzylinders im Gehäuse schnell und einfach zu finden.

Die Erfindung stellt hierzu eine Verriegelungsvorrichtung zum Verriegeln eines funktionswesentlichen Bauteils, insbesondere einer Lenksäule oder eines Gangschalthebels, eines Fahrzeuges mit den Merkmalen des unabhängigen Anspruches 1, insbesondere aus dem kennzeichnenden Teil, bereit. Merkmale, die zu den einzelnen Ausführungsformen der erfindungsgemäßen Verriegelungsvorrichtung offenbart werden, können in der Weise miteinander kombiniert werden, dass bezüglich der Offenbarung zu den Ausführungsformen stets wechselseitig Bezug genommen wird bzw. werden kann.

Die Erfindung stellt eine Verriegelungsvorrichtung zum Verriegeln eines funktionswesentlichen Bauteils, insbesondere einer Lenksäule oder eines Gangschalthebels, eines Fahrzeuges bereit, aufweisend: ein Gehäuse zur Aufnahme eines Schließzylinders, welcher zum Betätigen eines Verriegelungselementes des funktionswesentlichen Bauteils dient, ein Stützelement zum Abstützen des Schließzylinders im Gehäuse, wobei das Stützelement drehfest (und insbesondere axial verschieblich) im Gehäuse gelagert ist, wobei der Schließzylinder einen drehbaren Zylinderkern aufweist, der mit einer drehbaren Kupplung (zumindest im Normalbetrieb der Verriegelungsvorrichtung) verbindbar ist, die in eine Wirkverbindung mit dem Verriegelungselement bringbar ist, und wobei die Kupplung axial (d. h. entlang einer Längserstreckungsrichtung des Schließzylinders) am Stützelement abgestützt ist (sodass die Kupplung frei drehbar und durch das Stützelement axial, vorzugsweise nach unten weg vom Schließzylinder, bewegbar ist). Hierzu ist erfindungsgemäß eine Montageeinheit vorgesehen, um den Schließzylinder (für einen Normalbetrieb der Verriegelungsvorrichtung) in einer vorgegebenen Montageposition innerhalb des Gehäuses zumindest formschlüssig am Stützelement zu fixieren. In einem Einbruchsfall kann jedoch die Fixierung aufgehoben werden.

Das erfindungsgemäße Gehäuse kann zudem einen Anlassschalter aufnehmen, welcher mithilfe der Kupplung, bspw. durch Drehen der Kupplung, betätigt werden kann. Der Anlassschalter kann geschützt im Inneren des Gehäuses angeordnet werden, um sicherzustellen, dass nur der zum Schließzylinder passende Schüssel bzw. nur der berechtigte Benutzer den Schaltvorgang ausführen kann. Dabei spricht man von einem Zündschloss. Zusammen mit dem Verriegelungselement bildet das Zündschloss ein Lenkradschloss. Mit anderen Worten kann die erfindungsgemäße Verriegelungsvorrichtung als ein Lenkradschloss bezeichnet werden. Weiterhin kann die erfindungsgemäße Verriegelungsvorrichtung, die den mechanischen Schließzylinder umfasst, als eine mechanische Lenkradverriegelung bezeichnet werden. Das erfindungsgemäße Gehäuse kann dabei seitlich an der Lenksäule oder auf der Mittelkonsole angeordnet sein bzw. einen Teil der Lenksäulenverkleidung oder der Mittelkonsole bilden.

Das Stützelement ist gemäß der Erfindung drehfest im Gehäuse, d. h. nicht drehbar gegenüber dem Gehäuse, gelagert. Allerdings ist das Stützelement axial verschieblich am Gehäuse abgestützt, bspw. entgegen der Wirkung einer Feder. Vorzugsweise kann das Stützelement aus einer Betriebsstellung in eine Rückzugsstellung entgegen der Wirkung der Federkraft in das Gehäuseinnere, d. h. weg vom Schließzylinder eingedrückt werden. Der Schließzylinder ist wiederum axial unbeweglich gegenüber dem Gehäuse an diesem angeordnet. Der Schließzylinder weist einen drehbaren Zylinderkern und eine im Normalbetrieb der Verriegelungsvorrichtung nicht drehbare Zylinderhülse auf. Im Normallbetrieb der Verriegelungsvorrichtung wird ein passender Schlüssel verwendet, der Zuhaltungen im Schließzylinder sortiert und den Zylinderkern dadurch für eine Drehung von der Zylinderhülse entkoppelt. Wird jedoch in einem Einbruchsfall ein Einbruchswerkzeug verwendet und nicht alle Zuhaltungen richtig sortiert, verbleibt der Zylinderkern drehfest mit der Zylinderhülse verbunden. Bei einer gewaltsamen Drehung des Zylinderkerns kann in diesem Falle der Zylinderkern nicht von der Zylinderhülse entkoppelt werden und bleibt entweder stehen oder reißt die Zylinderhülse mit sich und verdreht diese gegenüber dem Gehäuse. Für den letzteren Fall ist eine Überlastkupplung vorgesehen, die die Wirkverbindung zwischen dem Schließzylinder und der Kupplung trennt. Die Überlastkupplung verschiebt das Stützelement weg vom Schließzylinder ins Innere des Gehäuses und nimmt dabei die Kupplung mit, weil die Kupplung axial am Stützelement abgestützt ist. Folglich wird zumindest im Normalbetrieb der Verriegelungsvorrichtung eine Wirkverbindung des Zylinderkerns mit der Kupplung hergestellt, wobei in einem Einbruchsfall und einer gewaltsamen Drehung des Schließzylinders die Wirkverbindung des Zylinderkerns mit der Kupplung aufgehoben wird.

Im Schließzylinder wird meistens eine Schlüsselabzugssperre angeordnet, die zu einer Seite aus dem Schließzylinder hervorstehen kann, wenn ein Schlüssel im Zylinderkern aufgenommen ist. Wird der Schließzylinder in einer falschen Position im Gehäuse eingebaut, so kann es zu einem erhöhten Verschleiß an den Elementen der Schlüsselabzugssperre kommen.

Der Erfindungsgedanke liegt dabei darin, dass eine Montageeinheit vorgesehen ist, sodass der Schließzylinder auf nur eine Art und Weise, d. h. in nur einer korrekten Montageposition im Gehäuse der Verriegelungsvorrichtung mechanisch fixiert bzw. montiert werden kann. Vorteilhafterweise ermöglicht die Montageeinheit eine intuitive Montage. Dadurch wird der Monteur entlastet und die Verriegelungsvorrichtung gegen Verschleiß geschützt. Somit kann die richtige Funktionsweise der Verriegelungsvorrichtung gewährleistet und die Lebensdauer der Verriegelungsvorrichtung erhöht werden. Denkbar ist es im Rahmen der Erfindung, dass die Montageeinheit mindestens ein paar korrespondierende Mittel aufweisen kann, die im Zusammenspiel die richtige Montageposition markieren können. Durch Herstellen einer Verbindung zwischen den korrespondierenden Mitteln der Montageeinheit kann der Monteur eine haptische Rückmeldung über die Richtigkeit der Montage erhalten. Im Rahmen der Erfindung können die korrespondierenden Mittel der Montageeinheit zwischen dem Gehäuse und dem Schließzylinder, zwischen dem Stützelement und dem Schließzylinder (im Rahmen einer Überlastsicherung) oder zwischen der Kupplung und dem Schließzylinder vorgesehen sein. Nach einem Vorteil der Erfindung kann die Montageeinheit direkt in bestehenden Funktionselementen der Verriegelungsvorrichtung (bspw. Überlastkupplung zwischen dem Stützelement und dem Schließzylinder) integriert werden und deren Funktionalität erweitern, ohne jedoch den Aufbau der Verriegelungsvorrichtung zu verkomplizieren. Die Erfindung stellt somit eine Verriegelungsvorrichtung bereit, welche eine richtige, einfache und intuitive Montage eines Schließzylinders innerhalb eines Gehäuses der Verriegelungsvorrichtung in nur einer vorgegebenen Montageposition ermöglicht.

Ferner kann im Rahmen der Erfindung bei einer Verriegelungsvorrichtung vorgesehen sein, dass die Montageeinheit in Form einer Überlastsicherung für den Schließzylinder ausgebildet ist. Die Überlastsicherung weist meistens zwei Paar korrespondierende Elemente, meistens Nuten und entsprechende Nocken, zwischen dem Schließzylinder und dem Stützelement auf, die im Normalbetrieb der Verriegelungsvorrichtung miteinander in mechanischer Wirkverbindung stehen. Bei gewaltsamer Drehung des Schließzylinders wird die mechanische Wirkverbindung zwischen den Elementen der Überlastsicherung aufgehoben, um eine Wirkungsübertragung vom Schließzylinder auf die Kupplung und schließlich auf das Verriegelungselement zu unterbinden. Diese Elemente der Überlastsicherung eignen sich daher auf eine vorteilhafte Weise zum Markieren der richtigen Montageposition des Schließzylinders innerhalb des Gehäuses, wenn ein Paar davon charakteristische Merkmale trägt bzw. sich vom anderen Paar unterscheidet. Somit kann die Funktionalität der Überlastsicherung mit einer Montagehilfefunktion neben einer Überlastfunktion erweitert werden, ohne die Überlastsicherung bei ihrer Überlastfunktion zu hindern. Somit kann eine einfach konstruierte, verbesserte Verriegelungsvorrichtung bereitgestellt werden. Weiterhin ist es von Vorteil, dass die Unterschiedsmerkmale an den Elementen der Überlastsicherung auch nachträglich angebracht werden können, um bestehende Verriegelungsvorrichtungen aufzurüsten.

Weiterhin kann im Rahmen der Erfindung bei einer Verriegelungsvorrichtung vorgesehen sein, dass eine Überlastsicherung zwischen dem Stützelement und dem Schließzylinder vorgesehen ist, um bei einer gewaltsamen Drehung des Schließzylinders in einem Einbruchsfall das Stützelement mit der Kupplung axial gesehen weg vom Schließzylinder zu verschieben und den Zylinderkern von der Kupplung zu entkoppeln. Grundsätzlich, ungeachtet der Position der Montageeinheit in der Verriegelungsvorrichtung, kann eine Überlastsicherung vorteilhaft sein, um eine Entkopplung der Verriegelungsmechanik vom Schließzylinder zu ermöglichen. Dadurch kann eine unberechtigte Manipulation der Verriegelungsvorrichtung zumindest erschwert und vorteilhafterweise verhindert werden.

Des Weiteren kann im Rahmen der Erfindung bei einer Verriegelungsvorrichtung vorgesehen sein, dass die Montageeinheit mindestens ein erstes Montagemittel oder ein zweites, insbesondere von dem ersten unterschiedliches, Montagemittel, aufweist, welches/welche in nur einer vorgegebenen Ausrichtung des Schließzylinders mit mindestens einem korrespondierenden ersten Positioniermittel oder einem zweiten, insbesondere von dem ersten unterschiedlichen, Positioniermittel, am Schließzylinder in mechanische Wirkverbindung bringbar ist. Auf diese Weise kann die richtige Montageposition des Schließzylinders im Gehäuse der Verriegelungsvorrichtung eindeutig vorgegeben werden.

Zudem ist es im Rahmen der Erfindung denkbar, dass der Schließzylinder mindestens ein erstes Positioniermittel oder ein zweites, insbesondere von dem ersten unterschiedliches, Positioniermittel in Form eines, vorzugsweise zwei unterschiedlich breiten oder hohen, Nocken oder Nuten, insbesondere an einer der Kupplung zugewandten Stirnseite oder an einer Mantelfläche des Schließzylinders, ausgebildet ist. Durch Nocken oder Nuten kann auf eine einfache Art und Weise eine mechanische Fixierung des Schließzylinders am Stützelement erreicht werden, wenn die Nocken oder Nuten in korrespondierende Nuten oder Nocken der Montageinheit eingreifen.

Außerdem ist es im Rahmen der Erfindung möglich, dass die Montageeinheit, insbesondere die Überlastsicherung, mindestens ein erstes Montagemittel oder ein zweites, vorzugsweise von dem ersten unterschiedliches, Montagemittel, in Form einer, bevorzugt zwei unterschiedlich breiten oder tiefen, Nuten oder Nocken an einer dem Schließzylinder zugewandten Seite des Stützelementes aufweist. Über das Stützelement wird der Schließzylinder im Gehäuse abgestützt. Dabei eignet sich die Position zwischen dem Schließzylinder und dem Stützelement auf eine vorteilhafte Weise dafür, um die Montageeinheit an der Position vorzusehen. Vorteilhafterweise wird zwischen dem Schließzylinder und dem Stützelement eine Überlastsicherung angeordnet, die bereits über korrespondierende Elemente verfügt, die leicht abgeändert werden können, um das Fixieren des Schließzylinders in nur einer Position am Stützelement zu ermöglichen.

Ferner kann im Rahmen der Erfindung bei einer Verriegelungsvorrichtung vorgesehen sein, dass das Stützelement in Form einer Nutenscheibe oder einer Nockenscheibe ausgebildet ist. Mit einer solchen Ausführung kann das Stützelement einen Sitz für den Schließzylinder bilden, sodass der Schließzylinder einfach am Stützelement positioniert werden kann. Durch Zusammenwirken der entsprechenden Mittel der Montageeinheit am Schließzylinder und dem Stützelement kann außerdem die richtige (Dreh-)Position des Schließzylinders am Stützelement aufgefunden, vorzugsweise durch ein Verdrehen des Schließzylinders gegenüber dem Stützelement ertastet, werden.

Weiterhin kann im Rahmen der Erfindung bei einer Verriegelungsvorrichtung vorgesehen sein, dass die Montageeinheit mindestens ein erstes Montagemittel oder ein zweites, insbesondere von dem ersten unterschiedliches, Montagemittel, in Form einer, vorzugsweise zwei unterschiedlich breiten, insbesondere axialen, Nuten oder Nocken im Gehäuse aufweist. Durch das Positionieren der Montageeinheit zwischen dem Gehäuse und dem Schließzylinder, insbesondere zwischen einer zylinderförmigen Aufnahme im Gehäuse für den Schließzylinder und der zylinderförmigen Mantelfläche des Schließzylinders, kann der Vorteil erreicht werden, dass er von vornherein in einer richtigen (Dreh-)Position in das Gehäuse eingesteckt werden kann. Die Montageinheit kann dabei außerdem sichtbar für den Monteur angeordnet sein, sodass der Monteur bewusst die richtige (Dreh-)Position des Schließzylinders gegenüber dem Gehäuse auswählen kann. Die Montage des Schließzylinders kann dadurch erleichtert werden.

Des Weiteren kann die Erfindung vorsehen, dass am Schließzylinder mindestens ein erstes Positioniermittel in Form eines Verbindungsnockens am Zylinderkern ausgebildet ist, wobei insbesondere die Montageeinheit mindestens ein erstes Montagemittel in Form einer Nut in der Kupplung aufweist. Die Wirkverbindung des Schließzylinders mit dem Verriegelungselement wird über die Kupplung und den Zylinderkern hergestellt, der Zylinderkern weist hierzu einen Verbindungsnocken, der in einer korrespondierenden Aufnahme der Kupplung eingesteckt werden kann, um eine drehfeste Verbindung des Zylinderkerns mit der Kupplung herzustellen. An dieser Stelle kann wiederum durch eine besondere Kontur des Verbindungsnockens und der Aufnahme der Kupplung ermöglicht werden, dass der Schließzylinder in nur einer bestimmten Position an der Kupplung positioniert werden kann. Dadurch kann die Montageeinheit mit bestehenden Elementen der Verriegelungsvorrichtung, sogar nachträglich, realisiert werden. Die Funktionalität der Kupplung kann dadurch erweitert werden, ohne die Übertragungsfunktion der Drehbewegung vom Schließzylinder an das Verriegelungselement zu stören.

Zudem kann die Erfindung bei einer Verriegelungsvorrichtung vorsehen, dass mindestens ein erstes Positioniermittel oder ein zweites, insbesondere von dem ersten unterschiedliches, Positioniermittel am Schließzylinder mindestens eine, vorzugsweise zwei unterschiedlich ausgerichtete, Aushebeschrägen aufweist. Bereits durch die vorhandenen Aushebeschrägen am Schließzylinder, bspw. im Rahmen einer Überlastsicherung oder im Rahmen einer Montageeinheit zwischen dem Schließzylinder und dem Gehäuse oder zwischen dem Schließzylinder und der Kupplung, die unterschiedlich ausgeführt werden können, kann die richtige Position des Schließzylinders im Gehäuse eindeutig markiert werden. Dies stellt eine besonders elegante und einfach realisierbare Möglichkeit dar, wie die Montageeinheit, ungeachtet ihrer Position, die richtige Position des Schließzylinders im Gehäuse vorgeben kann.

Außerdem kann die Erfindung bei einer Verriegelungsvorrichtung vorsehen, dass mindestens ein erstes Montagemittel oder ein zweites, insbesondere von dem ersten unterschiedliches, Montagemittel der Montageeinheit mindestens eine, vorzugsweise zwei unterschiedlich ausgerichtete, Ausheberampen aufweist. Somit kann eine Wechselwirkung zwischen den Aushebeschrägen am Schließzylinder und den Ausheberampen an der Montageeinheit hergestellt werden. Gleichwohl ist es aber auch denkbar, dass eine kinematische Umkehr ausgeführt werden kann und die Ausheberampen am Schließzylinder ausgebildet sein können, wobei die Aushebeschrägen an der Montageeinheit vorgesehen sein können. Somit kann eine Vielfalt an Möglichkeiten bereitgestellt werden, wie die erfindungsgemäße Montageeinheit hergestellt werden kann.

Ferner kann im Rahmen der Erfindung bei einer Verriegelungsvorrichtung vorgesehen sein, dass das Stützelement längsverschieblich zwischen einer Betriebsstellung und einer Rückzugsstellung im Gehäuse gelagert ist, wobei in der Betriebsstellung des Stützelementes der Schließzylinder am Stützelement durch die Montageeinheit fixiert ist, um eine Drehmomentübertragung zwischen dem Zylinderkern und der Kupplung zu ermöglichen, und in der Rückzugsstellung des Stützelementes der Schließzylinder axial gesehen beabstandet zum Stützelement ist, um den Zylinderkern von der Kupplung zu entkoppeln. Dadurch kann der Vorteil erreicht werden, dass in einem Einbruchsfall die mechanische Wirkverbindung zwischen dem Schließzylinder und der Kupplung aufgehoben werden kann. Beim Verdrehen des Schließzylinders können sich die Aushebeschrägen aus den korrespondierenden Sitzen der Überlastkupplung befreien, wodurch das Stützelement nach hinten und weg vom Schließzylinder verschoben wird. Das Stützelement zieht mit sich auch die Kupplung weg vom Schließzylinder. Ein weiteres Manipulieren des Schließzylinders wäre ab diesem Punkt zwecklos, da keine Drehung des Schließzylinders eine Übertragung auf die Kupplung nach sich zieht.

Weiterhin kann die Erfindung bei einer Verriegelungsvorrichtung ein Federelement vorsehen, um das Stützelement federelastisch, insbesondere mit einer Federkraft aus einer Rückzugsstellung in eine Betriebsstellung zu beaufschlagen. Somit kann im Normalbetrieb der Verriegelungsvorrichtung auf eine vorteilhafte Art und Weise eine Fixierung des Schließzylinders am Stützelement ermöglicht werden, die durch eine gewaltsame Betätigung des Schließzylinders gegen die Federkraft des Federelementes lösbar ist. Somit kann die Sicherheit im Fahrzeug erhöht werden, um zu verhindern, dass das funktionswesentliche Bauteil unberechtigterweise entriegelt und das Fahrzeug gelenkt werden kann.

Weitere Maßnahmen und Vorteile sowie technische Merkmale der Erfindung ergeben sich aus den Ansprüchen, der nachfolgenden Beschreibung und den Zeichnungen. Dabei können unterschiedliche Merkmale für sich alleine und in einer beliebigen Kombination vorteilhaft sein, ohne den Rahmen der Erfindung zu verlassen. In den nachstehenden Figuren ist die erfindungsgemäße Verriegelungsvorrichtung in mehreren Ausführungsbeispielen detailliert dargestellt. Es zeigen:
- Fig. 1: eine schematische Darstellung einer bekannten Verriegelungsvorrichtung in einer Ansicht auf ein Stützelement von unten,
- Fig. 2: eine schematische Darstellung einer erfindungsgemäßen Verriegelungsvorrichtung in einer Ansicht auf ein Stützelement von unten,
- Fig. 3a: eine mögliche Ausführungsform einer erfindungsgemäßen Verriegelungsvorrichtung mit einer Montageeinheit, die in einer Überlastsicherung integriert ist, in einem Normalbetrieb der V erriegelu ngsvorrichtung,
- Fig. 3b: eine Darstellung der Verriegelungsvorrichtung gemäß der Figur 3a bei einem Einbruchsversuch,
- Fig. 3c: eine Darstellung der Verriegelungsvorrichtung gemäß der Figur 3b bei einer aktivierten Überlastsicherung nach einer gewaltsamen Drehung des Schließzylinders bei einem Einbruchsversuch,
- Fig. 4a: eine mögliche Ausführungsform einer erfindungsgemäßen Verriegelungsvorrichtung in einer Ansicht auf ein Stützelement von unten,
- Fig. 4b: eine schematische Darstellung des Stützelementes gemäß der Figur 4a in einer radialen Schnittdarstellung,
- Fig. 5a: eine mögliche Ausführungsform einer erfindungsgemäßen Verriegelungsvorrichtung in einer Ansicht auf ein Stützelement von unten,
- Fig. 5b: eine schematische Darstellung des Stützelementes gemäß der Figur 5a in einer radialen Schnittdarstellung,
- Fig. 6a: eine mögliche Ausführungsform einer erfindungsgemäßen Verriegelungsvorrichtung in einer Ansicht auf ein Stützelement von unten,
- Fig. 6b: eine schematische Darstellung des Stützelementes gemäß der Figur 6a in einer axialen Schnittdarstellung,
- Fig. 7: eine mögliche Ausführungsform einer erfindungsgemäßen Verriegelungsvorrichtung in einer axialen Schnittdarstellung durch ein Gehäuse der Verriegelungsvorrichtung,
- Fig. 8a: eine mögliche Ausführungsform einer erfindungsgemäßen Verriegelungsvorrichtung in einer Ansicht auf ein Stützelement von unten,
- Fig. 8b: eine schematische Darstellung des Stützelementes gemäß der Figur 8a in einer axialen Schnittdarstellung,
- Fig. 9: eine perspektivische Darstellung einer erfindungsgemäßen Verriegelungsvorrichtung mit einem freigelegten Schließzylinder, und
- Fig. 10: eine weitere perspektivische Darstellung einer erfindungsgemäßen Verriegelungsvorrichtung mit einem freigelegten Schließzylinder.

In den nachfolgenden Figuren werden für die gleichen technischen Merkmale auch von unterschiedlichen Ausführungsbeispielen die identischen Bezugszeichen verwendet.

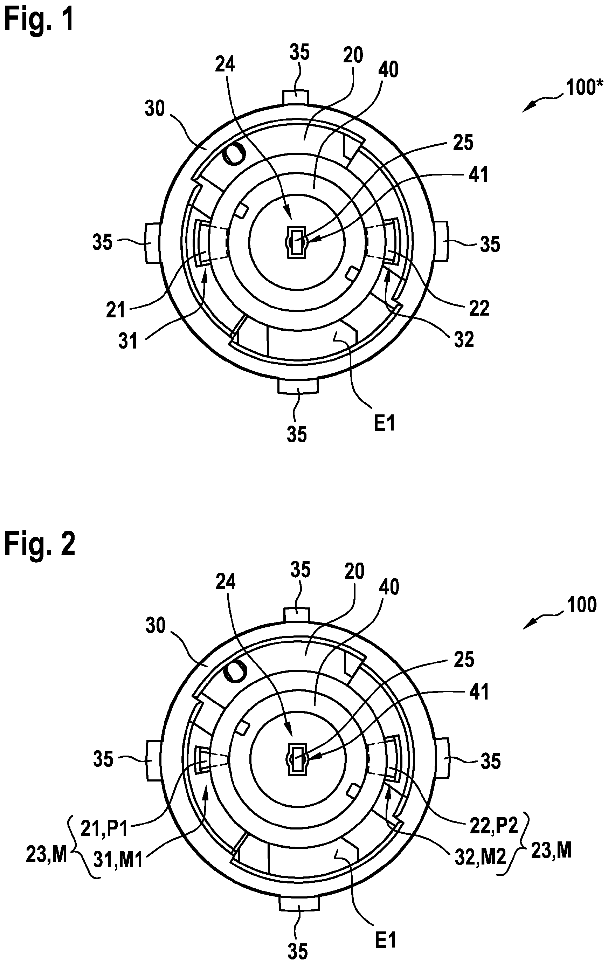

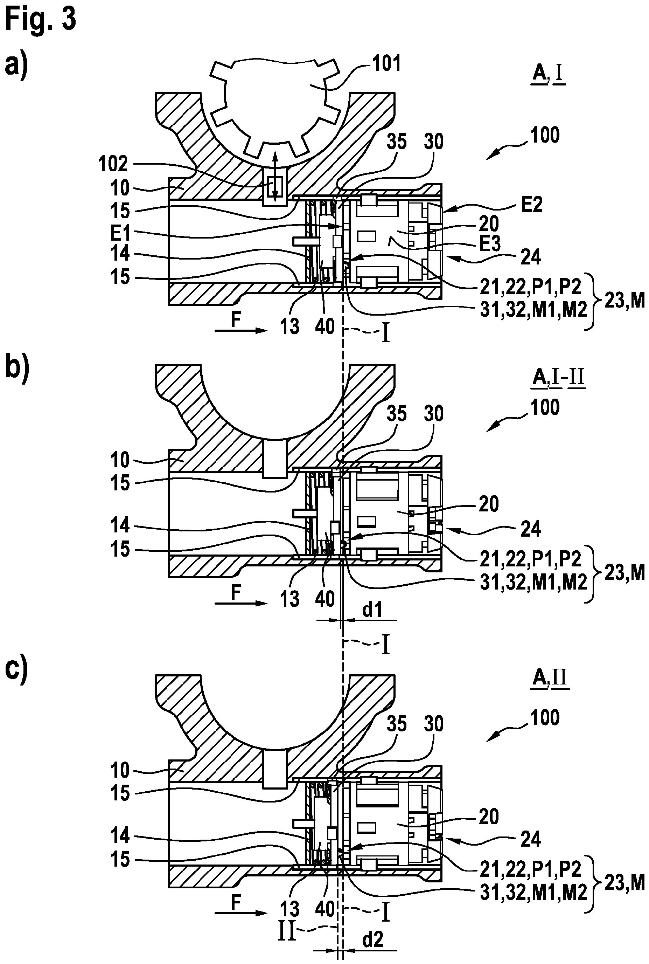

Die Figur 1a zeigt eine bekannte Verriegelungsvorrichtung 100* zum Verriegeln eines funktionswesentlichen Bauteils 101 (dargestellt in der Figur 3a), wie. z. B. einer Lenksäule oder eines Gangschalthebels, für ein Fahrzeug, die mit einem Schließzylinder 20 ausgeführt ist. Der Schließzylinder 20 dient dabei zum mechanischen Betätigen eines beispielhaft in der Figur 3a dargestellten Verriegelungselementes 102, welches in Form eines Sperrbolzens ausgebildet sein kann und welches das funktionswesentliche Bauteil 101 nach dem Abstellen des Fahrzeuges verriegeln kann. Ein drehbarer Zylinderkern 24 des Schließzylinders 20 wird hierzu mit einer Kupplung 40 drehfest verbunden, indem ein am Zylinderkern 24 angeformter Verbindungsnocken 25 in eine Nut 41 in der Kupplung 40 eingesteckt wird. Die Kupplung 40 kann eine Drehbewegung des Zylinderkerns 24 des Schließzylinders 20 auf einen nicht dargestellten Anlassschalter und auf das Verriegelungselement 102 übertragen.

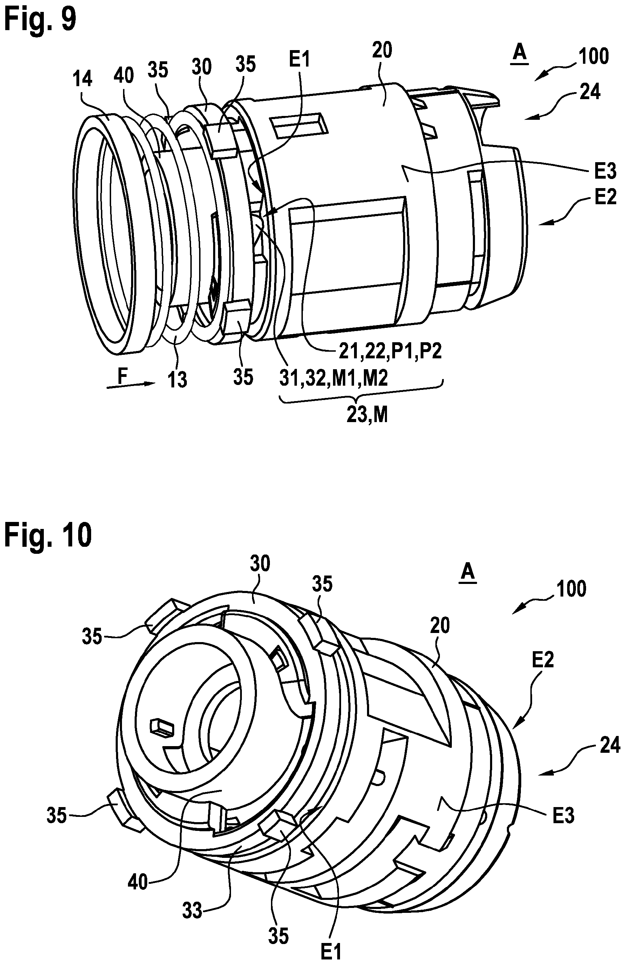

Der Schließzylinder 20 wird an einem Stützelement 30, bspw. in Form einer Nuten- oder einer Nockenscheibe, abgestützt, welche wiederum über einen oder mehrere Vorsprünge 35 drehfest und längsverschieblich in einem Gehäuse 10 aufgenommen wird, welches, wie in den Figuren 3a bis 3c gezeigt ist, ausgeführt werden kann. Am Stützelement 30 ist die drehbare Kupplung 40 axial abgestützt, sodass die Kupplung 40 mit dem Stützelement 30 axial verschoben werden kann. Die Kupplung 40 kann mit dem Stützelement 30 vom Schließzylinder 20 weggedrückt werden, wenn eine Überlastsicherung 23 aktiviert wird. Die Überlastsicherung 23 wird über eine gewaltsame Drehung des Schließzylinders 20 aktiviert. Dabei verschieben sich zwei herkömmlicherweise gleich ausgebildete Nocken 21, 22, die an einer kupplungsseitigen Stirnseite E1 des Schließzylinders 20 ausgeformt sind, aus den korrespondierenden Nuten 31, 32, die am Stützelement 30 ausgeformt sind. Meistens wird dabei eine Feder 13 komprimiert, die bspw. in der Figur 9 gezeigt ist und die ein federelastisch nachgiebiges Eindrücken des Stützelementes 30 und der Kupplung 40 in das Innere des Gehäuses 10 und weg vom Schließzylinder 20 ermöglicht.

Bei einer solchen Verriegelungsvorrichtung 100* kann nachteilig sein, dass der Schließzylinder 20 in zwei unterschiedlichen Drehpositionen innerhalb des Gehäuses 10 der Verriegelungsvorrichtung 100 montiert werden kann. Da jedoch der Schließzylinder 20 selbst nicht vollständig rotationssymmetrisch aufgebaut ist, können Elemente des Schließzylinders 20, die von seiner Mantelfläche E3 hervorstehen und somit in Berührung mit dem Gehäuse 10 kommen, wie z. B. eine aus Einfachheitsgründen nicht dargestellte Schlüsselabzugssicherung, je nach Drehstellung des montierten Schließzylinders 20 einem höheren mechanischen Verschleiß unterliegen. Die Verriegelungsvorrichtung 100* kann dadurch in Ihrer Funktion gestört werden.

Die Figur 2 zeigt eine erfindungsgemäße Verriegelungsvorrichtung 100 zum Verriegeln eines funktionswesentlichen Bauteils 101, insbesondere einer Lenksäule oder eines Gangschalthebels, eines Fahrzeuges, welches beispielhaft in der Figur 3a gezeigt ist. Die Verriegelungsvorrichtung 100 ist erfindungsgemäß derart ausgeführt, dass der Schließzylinder 20 in nur einer vorgegebenen Montageposition A im Gehäuse 10 montiert bzw. an einem Stützelement 30, bspw. in Form einer Nocken- oder einer Nutenscheibe, abgestützt werden kann.

Die erfindungsgemäße Verriegelungsvorrichtung 100 umfasst weiterhin ein Gehäuse 10, in welchem das Stützelement 30 drehfest und axial verschieblich gelagert sein kann, wie es im Nachfolgenden die Figuren 3a bis 3c verdeutlichen. Der erfindungsgemäße Schließzylinder 20 umfasst ebenfalls einen drehbaren Zylinderkern 24, der mit einer drehbaren Kupplung 40 zumindest im Normalbetrieb der Verriegelungsvorrichtung 100 bzw. in einer Betriebsstellung I des Stützelementes 30 verbindbar ist, wobei die Betriebsstellung I des Stützelementes 30 in der Figur 3a gezeigt ist. Der Schließzylinder 20 weist eine Mantelfläche E3 auf, die in einer zylinderförmigen Aufnahme des Gehäuses 10 aufgenommen ist. Nach außen ist eine Frontseite E2 des Schließzylinders 20 ausgerichtet, die eine Aufnahme eines Schlüssels in den Zylinderkern 24 ermöglicht.

Die Kupplung 40 kann über eine aus Einfachheitsgründen nicht dargestellte Schließmechanik in eine Wirkverbindung mit einem Verriegelungselement 102 gebracht werden, welches in Form eines Sperrbolzens ausgeführt sein und welches in eine Ausnehmung am funktionswesentlichen Bauteil 101 hineintauchen kann, um das funktionswesentliche Bauteil 101 zu verriegeln. Die Kupplung 40 ist zumindest in eine Richtung axial am Stützelement 30 abgestützt, sodass die Kupplung 40 zwar frei drehbar ist, aber axial zusammen mit dem Stützelement 30, vorzugsweise weg vom Schließzylinder 20, verfahrbar ist.

Um den Schließzylinder 20 in nur einer möglichen, d. h. vorgegebenen Montageposition A innerhalb des Gehäuses 10 zumindest formschlüssig am Stützelement 30 zu fixieren, ist erfindungsgemäß eine Montageeinheit M vorgesehen.

Das erfindungsgemäße Gehäuse 10 kann weiterhin einen nicht dargestellten Anlassschalter aufnehmen, welcher mithilfe der Kupplung 40 betätigt werden kann. Dabei spricht man von einem Zündschloss. Zusammen mit dem Verriegelungselement 102 bildet das Zündschloss ein Lenkradschloss. Mit anderen Worten kann die erfindungsgemäße Verriegelungsvorrichtung 100 als ein Lenkradschloss, insbesondere eine mechanische Lenkradverriegelung, bezeichnet werden. Der Anlassschalter kann geschützt im Inneren des Gehäuses 10 hinter dem Schließzylinder 20 und hinter der Schließmechanik angeordnet werden, sodass der Anlassschalter von außen nicht manipuliert werden kann. Nur, wenn ein zum Schließzylinder 20 passender Schüssel verwendet wird, können in den Figuren nicht dargestellte Zuhaltungen innerhalb des Zylinderkerns 24 sortiert werden, um den Zylinderkern 24 für eine Drehung relativ zu einer Zylinderhülse zu ermöglichen. Das erfindungsgemäße Gehäuse 10 kann dabei seitlich an der Lenksäule oder auf der Mittelkonsole angeordnet sein bzw. einen Teil der Lenksäulenverkleidung oder der Mittelkonsole bilden.

Vorzugsweise kann das Stützelement 30 aus der in der Figur 3a gezeigten Betriebsstellung I in eine Rückzugsposition II entgegen der Wirkung einer Federkraft F einer Feder 13 in das Gehäuseinnere, d. h. weg vom Schließzylinder 20 eingedrückt werden, wie es die Figuren 3b und 3c zeigen. Der Schließzylinder 20 ist wiederum axial unbeweglich gegenüber dem Gehäuse 10 angeordnet. In einem Einbruchsfall, wenn ein Einbruchswerkzeug, bspw. ein Schraubenzieher, verwendet wird, werden nicht alle Zuhaltungen innerhalb des Zylinderkerns 24 richtig sortiert, sodass der Zylinderkern 24 drehfest mit der Zylinderhülse verbunden bleibt. Bei einer gewaltsamen Drehung des Zylinderkerns 24 durch das Einbruchswerkzeug kann sich in diesem Falle der Zylinderkern 24 nicht von der Zylinderhülse entkoppeln und bleibt entweder stehen oder reißt die Zylinderhülse mit sich und verdreht den Schließzylinder 20 gegenüber dem Gehäuse 10. Um eine Entriegelung des funktionswesentlichen Bauteils 101 auch in diesem Fall zu unterbinden, ist eine Überlastkupplung 23 vorgesehen, die die Wirkverbindung zwischen dem Schließzylinder 20 und dem Stützelement 30 und somit zwischen dem Schließzylinder 20 und der Kupplung 40 trennt. Die Überlastkupplung 23 verschiebt das Stützelement 30 weg vom Schließzylinder 20 ins Innere des Gehäuses 10 und nimmt dabei die Kupplung 40 mit, weil die Kupplung 40 axial am Stützelement 30 abgestützt ist. Somit kann in einem Einbruchsfall und einer gewaltsamen Drehung des Schließzylinders 20 die Wirkverbindung des Zylinderkerns 24 mit der Kupplung 40 aufgehoben werden.

Die Überlastsicherung 23 umfasst im Beispiel der Figur 2 zwei unterschiedlich große, bspw. unterschiedlich breite, Nocken 21, 22 am Schließzylinder 20, insbesondere an einer der Kupplung 40 zugewandten Stirnseite E1 des Schließzylinders 20, die im Normalbetrieb der Verriegelungsvorrichtung 100 in zwei korrespondierende, ebenfalls unterschiedlich breite, Nocken 31, 32 innerhalb des Stützelementes 30 aufgenommen sind.

Die Erfindung erkennt dabei, dass die Mittel der Überlastsicherung 23 paarweise unterschiedlich ausgeführt werden können, um sicherzustellen, dass der Schließzylinder 20 in nur einer Drehposition am Stützelement 30 fixiert werden kann. Mit anderen Worten kann die Montageeinheit M im Rahmen der Erfindung innerhalb der Überlastsicherung 23 integriert sein. Somit kann die Funktionalität der Überlastsicherung 23 mit einer Montagehilfefunktion neben einer Überlastfunktion erweitert werden, ohne die Überlastsicherung 23 bei ihrer Überlastfunktion zu hindern. Somit kann eine einfach konstruierte, verbesserte Verriegelungsvorrichtung 100 bereitgestellt werden. Vorteilhafterweise können die Unterschiedsmerkmale an den Elementen der Überlastsicherung 23 auch nachträglich angebracht werden, um bestehende Verriegelungsvorrichtungen 100 aufzurüsten.

Die Figur 2 zeigt ein erstes Ausführungsbeispiel der erfindungsgemäßen Montageeinheit M, bei welchem die Nocken 21, 22 am Schließzylinder 20 und die Nuten 31, 32 am Stützelement 30 unterschiedlich groß ausgebildet sind. Gleichwohl ist es aber auch denkbar, dass am Schließzylinder 20 die Nuten 21, 22 ausgebildet sein können, wobei am Stützelement 30 die korrespondierenden Nocken 31, 32 ausgebildet sein können, wie es die Figuren 3a bis 3c zeigen.

Die Nocken oder die Nuten 21, 22 am Schließzylinder 20 dienen als Positioniermittel P1, P2 der Montageeinheit M, die mit entsprechenden Montagemitteln M1, M2, bspw. in Form von Nuten oder Nocken 31, 32 am Stützelement 30, der Montageeinheit M wechselwirken können.

In den Ansichten der Figuren 3a bis 3c ist es außerdem erkennbar, dass das Stützelement 30 mittels vorsprungartiger Lagerelemente 35 in korrespondierende Lagernuten 15 innerhalb des Gehäuses 10 längsverschieblich aufgenommen wird. Von einer dem Schließzylinder 20 abgewandten Seite des Stützelementes 30 ist ein stationäres Gehäuseelement 14 angebracht, zwischen welchem und dem Stützelement 30 eine Feder 13, bspw. eine schraubenförmige, Druckfeder, vorgesehen ist. Die Federkraft F der Feder 13 sorgt dafür, dass das Stützelement 30 aus der Betriebsstellung I in die Rückzugsstellung II eingedrückt werden kann.

In der Ansicht der Figur 3a greifen die Nocken 31, 32, die bspw. am Stützelement 30 angeformt sind, in korrespondierende Nuten 21, 22 am Schließzylinder 20. In der Figur 3b ist gezeigt, wie die Nocken 31, 32 bei einer Drehung des Schließzylinders 20 sich innerhalb der Nuten 21, 22 verschieben können. Die Figur 3c zeigt schließlich, wie sich die Nocken 31, 32 außerhalb der Nuten 21, 22 herausheben und somit befreien können. Dadurch wird der im Normalbetrieb der Verriegelungsvorrichtung 100 üblicher Abstand d1 zwischen dem Schließzylinder 20 und dem Stützelement 30 zu einem Abstand d2 vergrößert, der für einen Überlastfall charakteristisch ist. Im Überlastfall ist das Stützelement 30 derart auf einen Abstand d2 vom Schließzylinder 20 verschoben, dass die drehfeste Verbindung der Kupplung 40 und dem Zylinderkern 24 aufgehoben ist.

Auch im Ausführungsbeispiel der Erfindung gemäß der Figuren 3a bis 3c ist die Montageeinheit M zwischen dem Schließzylinder 20 und dem Stützelement 30 vorgesehen und innerhalb der Überlastsicherung 23 integriert.

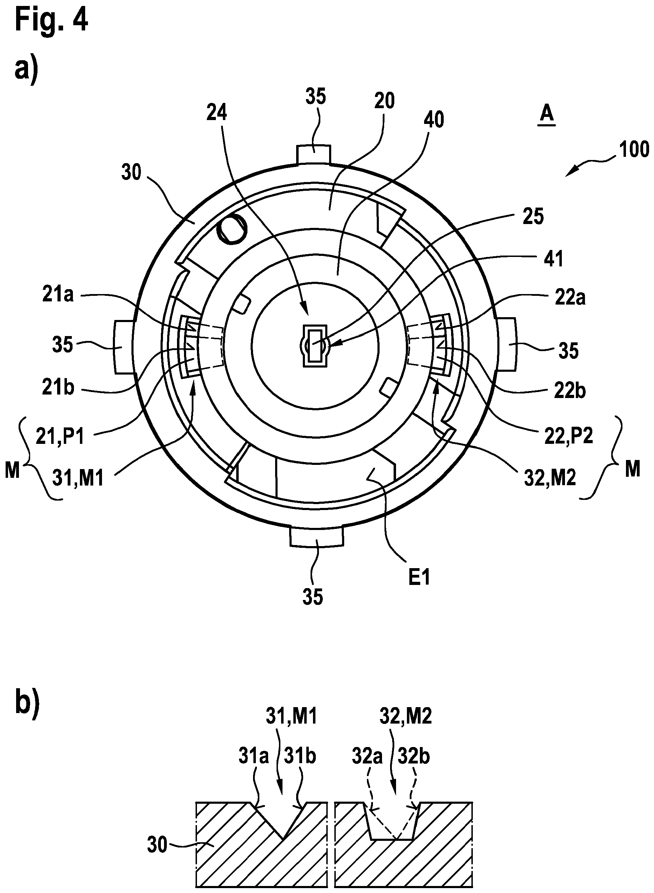

Die Figuren 4a und 4b zeigen ein weiteres Ausführungsbeispiel einer erfindungsgemäßen Montageeinheit M. Erfindungsgemäß markiert die Montageeinheit M nur eine richtige Montageposition A des Schließzylinders 20 am Stützelement 30. Hierzu kann die Montageeinheit M ebenfalls innerhalb der Überlastsicherung 23 integriert sein. Um die Mittel der Überlastsicherung 23 zu individualisieren, kann der Schließzylinder 20 am ersten Positioniermittel P1 und/oder am zweiten, unterschiedlich oder sogar gleich breiten, Positioniermittel P2, die entweder in Form von Nocken oder in Form von Nuten ausgebildet sein können, zwei unterschiedlich ausgerichtete Aushebeschrägen 21a, 21b, 22a, 22b aufweisen. Die Figur 4b zeigt weiterhin in einer schematisch dargestellten radialen Schnittdarstellung, dass das Stützelement 30 am ersten Montagemittel M1 und/oder am zweiten, unterschiedlich oder sogar gleich breiten, Montagemittel M2, die sowohl in Form von Nuten als auch in Form von Nocken ausgebildet sein können, zwei unterschiedlich ausgerichtete Ausheberampen 31a, 31b, 32a, 32b aufweisen kann. Somit kann sichergestellt werden, dass der Schließzylinder 20 in nur einer Montageposition A am Stützelement 30 zur Auflage kommen kann, sodass die Aushebeschrägen 21a, 21b, 22a, 22b an den Ausheberampen 31a, 31b, 32a, 32b anliegen können.

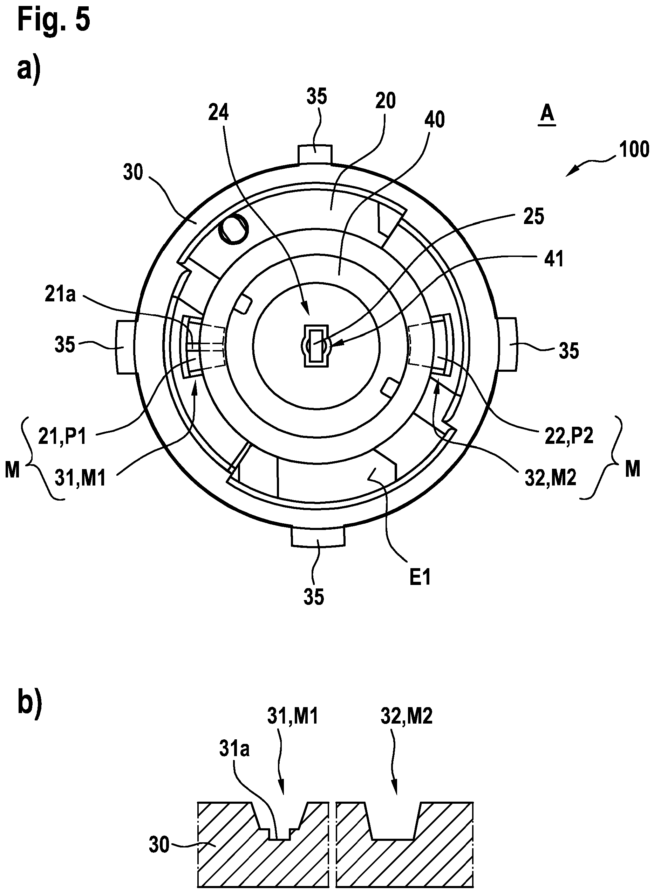

Die Figuren 5a und 5b zeigen ein weiteres Ausführungsbeispiel einer erfindungsgemäßen Montageeinheit M. Erfindungsgemäß markiert die Montageeinheit M auch diesmal nur eine richtige Montageposition A des Schließzylinders 20 am Stützelement 30 und ist innerhalb der Überlastsicherung 23 integriert. Um die Mittel der Überlastsicherung 23 zu individualisieren, kann der Schließzylinder 20 am einem der Positioniermittel P1, P2, bspw. am ersten Positioniermittel P1 eine Wulst als eine Aushebeschräge 21a und somit als Unterscheidungsmerkmal zum zweiten Positioniermittel P2 aufweisen. Die Figur 5b zeigt weiterhin, dass das Stützelement 30 ebenfalls nur an einem der beiden Montagemittel M1, M2, bspw. am ersten Montagemittel M1 eine korrespondierende Vertiefung als eine Ausheberampe 31a aufweisen kann. Die Wulst passt dabei in nur einer Drehposition des Schließzylinders 20 gegenüber dem Stützelement 30 in die korrespondierende Vertiefung am Stützelement 30. Somit kann der Schließzylinder 20 in nur einer Montageposition A am Stützelement 30 richtig montiert werden.

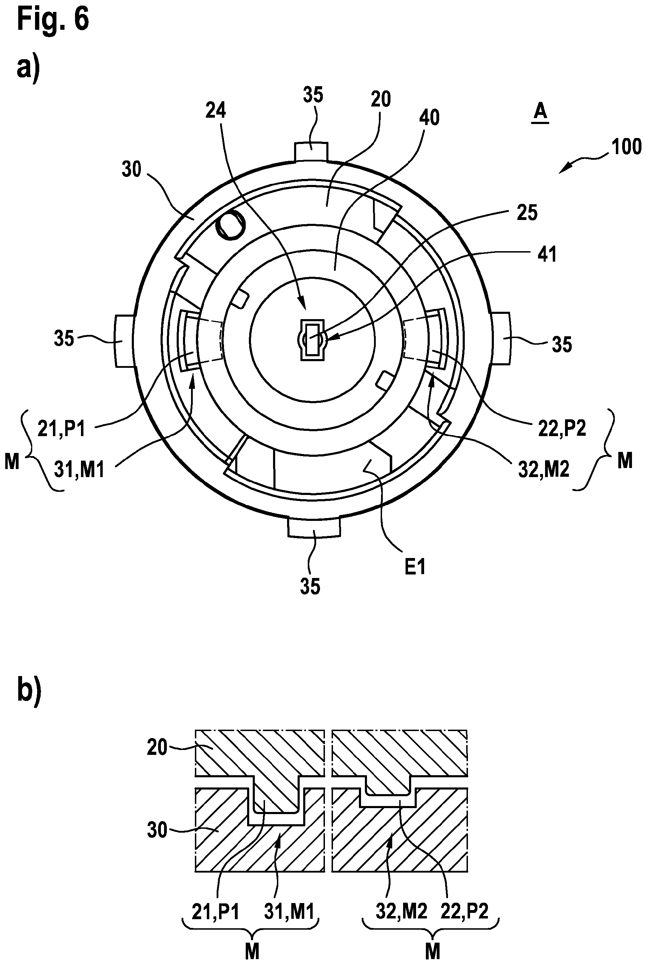

Die Figuren 6a und 6b zeigen ein weiteres Ausführungsbeispiel der erfindungsgemäßen Montageeinheit M. Erfindungsgemäß markiert die Montageeinheit M nur eine richtige Montageposition A des Schließzylinders 20 am Stützelement 30 und ist innerhalb der Überlastsicherung 23 integriert. Um die Mittel der Überlastsicherung 23 zu individualisieren, kann der Schließzylinder 20 unterschiedlich hohe, wenn auch gleich breite, Positioniermittel P1, P2 aufweisen, die entweder in Form von Nocken oder in Form von Nuten ausgebildet sein können. Die Figur 6b zeigt weiterhin in einer Schnittdarstellung, dass das Stützelement 30 zwei unterschiedlich tiefe, wenn auch gleich breite, Montagemittel M1, M2 aufweisen kann, die sowohl in Form von Nuten als auch in Form von Nocken ausgebildet sein können. Somit kann sichergestellt werden, dass der Schließzylinder 20 in nur einer Montageposition A am Stützelement 30 abgestützt werden kann, wenn die korrespondierend hohen Positioniermittel P1, P2 in entsprechend tiefe Montagemittel M1, M2 eingeführt werden können.

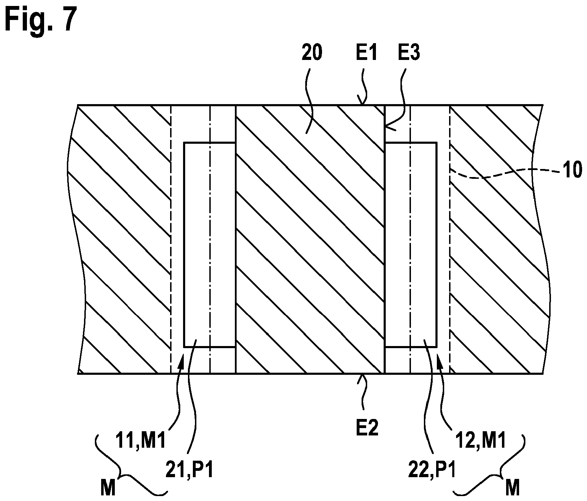

Die Figur 7 zeigt ein weiteres Ausführungsbeispiel der erfindungsgemäßen Montageeinheit M. Hierbei ist die Montageeinheit M zwischen der Mantelfläche E3 des Schließzylinders 20 und dem Gehäuse 10 ausgebildet. Dabei können an der Mantelfläche E3 des Schließzylinders 20 eins oder mehrere, bspw. zwei, Positioniermittel P1, P2 vorgesehen sein, die gleich oder unterschiedlich breit, gleich oder unterschlich lang, nockenförmig oder nutenförmig ausgebildet sein können. Zum Führen der Positioniermittel P1, P2 beim Einstecken des Schließzylinders 20 in das Gehäuse 10 können entsprechend eins oder mehrere, bspw. zwei, korrespondierende Montagemittel M1, M2 vorgesehen sein, die ebenfalls unterschiedlich breit oder lang sowie nutenförmig oder nockenförmig ausgebildet sein können. Auch dadurch kann ermöglicht werden, dass das oder die Positioniermittel P1, P2 in nur einer Drehposition des Schließzylinders 20 mit den korrespondierenden Montagemittel M1, M2 wechselwirken können.

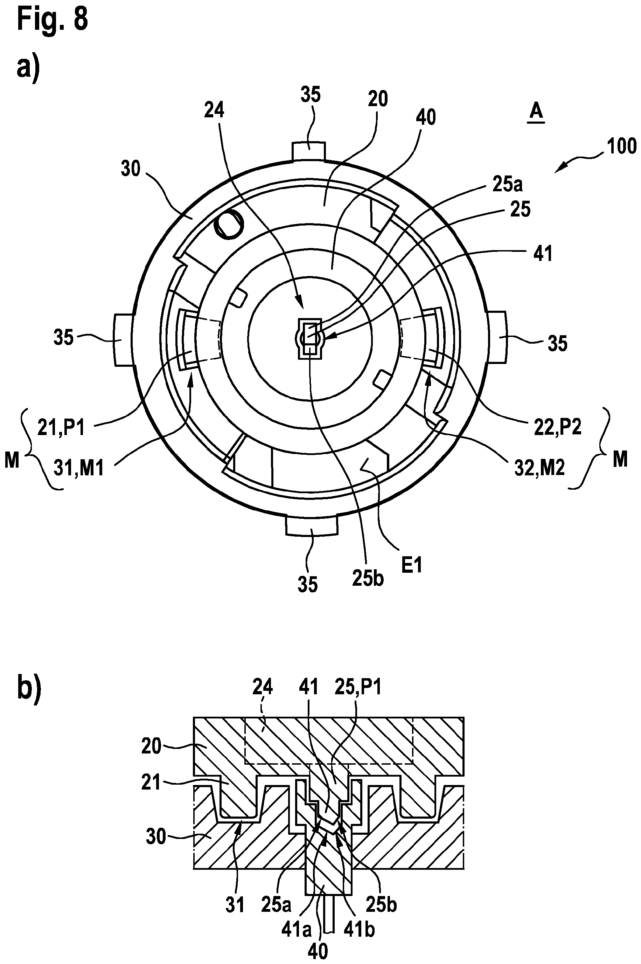

Die Figuren 8a und 8b zeigen ein weiteres mögliches Ausführungsbeispiel der erfindungsgemäßen Montageeinheit M. Die Montageeinheit M ist dabei zwischen dem Schließzylinder 20 und der Kupplung 40 angeordnet. Hierzu ist am Zylinderkern 24 ein Verbindungsnocken 25 als ein Positioniermittel P1 der Montageeinheit M vorgesehen, welcher zwei unterschiedlich ausgerichtete Aushebeschrägen 25a, 25b aufweisen kann. Der Verbindungsnocken 25 kann mit einer Nut 41 als ein Montagemittel M1 der Montageeinheit M wirkverbunden werden, die mit entsprechenden Ausheberampen 41a, 41b ausgebildet sein kann. Die Aushebeschrägen 25a, 25b kommen in nur einer Drehposition des Schließzylinders 20 zur Auflage auf den Ausheberampen 41a, 41b, wodurch die richtige Montageposition A des Schließzylinders 20 innerhalb des Gehäuses 10 eindeutig markiert werden kann.

Die Figuren 9 und 10 zeigen den Schließzylinder 20 gemäß einer Ausführungsform der Erfindung gemäß den Figuren 3a bis 3c in verschiedenen perspektivischen Ansichten. Aus der Figur 9 ist ersichtlich, dass das Stützelement 30 federelastisch mit der Federkraft F der Feder 13 aus der Rückzugsstellung II (Figur 3c) in die Betriebsstellung I (Figur 3a) beaufschlagt werden kann. Die Feder 13 kann hierzu zwischen einem gegenüber dem Gehäuse 10 stationären Gehäuseelement 14 und dem Stützelement 30 angeordnet sein. Die Figur 9 zeigt die Feder 13 beispielhaft als eine schraubenförmige Druckfeder. Die Figur 10 zeigt in einer perspektivischen Ansicht die Lagerelemente 35, die axial verschieblich in entsprechende Lagernuten 15 innerhalb des Gehäuses 10 aufgenommen werden können, die in den Figuren 3a bis 3c gezeigt sind.

Die voranstehende Erläuterung der Ausführungsformen beschreibt die vorliegende Erfindung ausschließlich im Rahmen von Beispielen. Selbstverständlich können einzelne Merkmale der vorliegenden Erfindung, sofern technisch sinnvoll, frei miteinander kombiniert werden, ohne den Rahmen der vorliegenden Erfindung/Ansprüche zu verlassen.

### Bezuaszeichenliste

- 100: Verriegelungsvorrichtung
- 101: funktionswesentliches Bauteil
- 102: Verriegelungselement

- 100*: bekannte Verriegelungsvorrichtung

- 10: Gehäuse
- 11: Nut
- 12: Nut
- 13: Feder
- 14: Gehäuseelement
- 15: Lagernut

- 20: Schließzylinder
- 21: Nocken, Nut
- 21a: Aushebeschräge
- 21b: Aushebeschräge
- 22: Nocken, Nut
- 22a: Aushebeschräge
- 22b: Aushebeschräge
- 23: Überlastsicherung
- 24: Zylinderkern
- 25: Verbindungsnocken
- 25a: Aushebeschräge
- 25b: Aushebeschräge

- 30: Stützelement
- 31: Nut, Nocken
- 31a: Ausheberampe
- 31b: Ausheberampe
- 32: Nut, Nocken
- 32a: Ausheberampe
- 32b: Ausheberampe

- 35: Lagerelement

- 40: Kupplung
- 41: Nut
- 41a: Ausheberampe
- 41b: Ausheberampe

- A: Montageposition

- M: Montageeinheit

- M1: erstes Montagemittel
- M2: zweites Montagemittel

- P1: erstes Positioniermittel
- P2: zweites Positioniermittel

- F: Federkraft

- I: Betriebsstellung
- II: Rückzugsstellung

- E1: Stirnseite
- E2: Frontseite
- E3: Mantelfläche

- d1: Abstand zwischen dem Schließzylinder und dem Stützelement im Normalbetrieb
- d2: Abstand zwischen dem Schließzylinder und dem Stützelement im Überlastfall

## Patentansprüche

1. Verriegelungsvorrichtung (100) zum Verriegeln eines funktionswesentlichen Bauteils (101), insbesondere einer Lenksäule oder eines Gangschalthebels, eines Fahrzeuges, aufweisend:
ein Gehäuse (10), in welchem ein Schließzylinder (20) aufgenommen ist, welcher zum Betätigen eines Verriegelungselementes (102) des funktionswesentlichen Bauteils (101) dient,
ein Stützelement (30) zum Abstützen des Schließzylinders (20) im Gehäuse (10), wobei das Stützelement (30) drehfest im Gehäuse (10) gelagert ist,
und eine drehbare Kupplung (40), die in eine Wirkverbindung mit dem Verriegelungselement (102) bringbar ist,
wobei der Schließzylinder (20) einen drehbaren Zylinderkern (24) aufweist, der mit der drehbaren Kupplung (40) verbindbar ist,
und wobei die Kupplung (40) axial am Stützelement (30) abgestützt ist,
**dadurch gekennzeichnet,**
**dass** eine Montageeinheit (M) vorgesehen ist, um den Schließzylinder (20) in einer vorgegebenen Montageposition (A) innerhalb des Gehäuses (10) zumindest formschlüssig am Stützelement (30) zu fixieren.

2. Verriegelungsvorrichtung (100) nach dem vorhergehenden Anspruch,
**dadurch gekennzeichnet,**
**dass** die Montageeinheit (M) in Form einer Überlastsicherung (23) für den Schließzylinder (20) ausgebildet ist.

3. Verriegelungsvorrichtung (100) nach einem der vorhergehenden Ansprüche,
**dadurch gekennzeichnet,**
**dass** eine Überlastsicherung (23) zwischen dem Stützelement (30) und dem Schließzylinder (20) vorgesehen ist, um bei einer gewaltsamen Drehung des Schließzylinders (20) in einem Einbruchsfall das Stützelement (30) mit der Kupplung (40) in eine axiale Richtung weg vom Schließzylinder (20) zu verschieben und den Zylinderkern (24) von der Kupplung (40) zu entkoppeln.

4. Verriegelungsvorrichtung (100) nach einem der vorhergehenden Ansprüche,
**dadurch gekennzeichnet,**
**dass** die Montageeinheit (M) mindestens ein erstes Montagemittel (M1) oder ein zweites, insbesondere von dem ersten unterschiedliches, Montagemittel (M2), aufweist, welches/welche in nur einer vorgegebenen Ausrichtung des Schließzylinders (20) mit mindestens einem korrespondierenden ersten Positioniermittel (P1) oder einem zweiten, insbesondere von dem ersten unterschiedlichen, Positioniermittel (P2), am Schließzylinder (20) in mechanische Wirkverbindung bringbar ist.

5. Verriegelungsvorrichtung (100) nach einem der vorhergehenden Ansprüche,
**dadurch gekennzeichnet,**
**dass** am Schließzylinder (20) mindestens ein erstes Positioniermittel (P1) oder ein zweites, insbesondere von dem ersten unterschiedliches, Positioniermittel (P2) in Form eines, vorzugsweise zwei unterschiedlich breiten oder hohen bzw. tiefen, Nocken oder Nuten (21, 22), insbesondere an einer der Kupplung (40) zugewandten Stirnseite (E1) oder an einer Mantelfläche (E3) des Schließzylinders (20), ausgebildet ist.

6. Verriegelungsvorrichtung (100) nach einem der vorhergehenden Ansprüche,
**dadurch gekennzeichnet,**
**dass** die Montageeinheit (M), insbesondere die Überlastsicherung (23), mindestens ein erstes Montagemittel (M1) oder ein zweites, vorzugsweise von dem ersten unterschiedliches, Montagemittel (M2), in Form einer, bevorzugt zwei unterschiedlich breiten oder tiefen, Nuten oder Nocken (31, 32) an einer dem Schließzylinder (20) zugewandten Seite (S1) des Stützelementes (30) aufweist.

7. Verriegelungsvorrichtung (100) nach einem der vorhergehenden Ansprüche,
**dadurch gekennzeichnet,**
**dass** das Stützelement (30) in Form einer Nutenscheibe oder einer Nockenscheibe ausgebildet ist.

8. Verriegelungsvorrichtung (100) nach einem der vorhergehenden Ansprüche,
**dadurch gekennzeichnet,**
**dass** die Montageeinheit (M) mindestens ein erstes Montagemittel (M1) oder ein zweites, insbesondere von dem ersten unterschiedliches, Montagemittel (M2), in Form einer, vorzugsweise zwei unterschiedlich breiten, insbesondere axialen, Nuten oder Nocken (11, 12) im Gehäuse (10) aufweist.

9. Verriegelungsvorrichtung (100) nach einem der vorhergehenden Ansprüche,
**dadurch gekennzeichnet,**
**dass** der Schließzylinder (20) mindestens ein erstes Positioniermittel (P1) in Form eines Verbindungsnockens (25) am Zylinderkern (24) aufweist,
wobei insbesondere die Montageeinheit (M) mindestens ein erstes Montagemittel (M1) in Form einer Nut (41) in der Kupplung (40) aufweist.

10. Verriegelungsvorrichtung (100) nach einem der vorhergehenden Ansprüche,
**dadurch gekennzeichnet,**
**dass** mindestens ein erstes Positioniermittel (P1) oder ein zweites, insbesondere von dem ersten unterschiedliches, Positioniermittel (P2) am Schließzylinder (20) mindestens eine, vorzugsweise zwei unterschiedlich ausgerichtete, Aushebeschrägen (21a, 21b, 22a, 22b, 25a, 25b) aufweist.

11. Verriegelungsvorrichtung (100) nach einem der vorhergehenden Ansprüche,
**dadurch gekennzeichnet,**
**dass** mindestens ein erstes Montagemittel (M1) oder ein zweites, insbesondere von dem ersten unterschiedliches, Montagemittel (M2) der Montageeinheit (M) mindestens eine, vorzugsweise zwei unterschiedlich ausgerichtete, Ausheberampen (31a, 31b, 32a, 32b, 41a, 41b) aufweist.

12. Verriegelungsvorrichtung (100) nach einem der vorhergehenden Ansprüche,
**dadurch gekennzeichnet,**
**dass** das Stützelement (30) längsverschieblich zwischen einer Betriebsstellung (I) und einer Rückzugsstellung (II) im Gehäuse (10) gelagert ist,
wobei in der Betriebsstellung (I) des Stützelementes (30) der Schließzylinder (20) am Stützelement (30) durch die Montageeinheit (M) fixiert ist, um eine Drehmomentübertragung zwischen dem Zylinderkern (24) und der Kupplung (40) zu ermöglichen,
und in der Rückzugsstellung (II) des Stützelementes (30) der Schließzylinder (20) in eine axiale Richtung gesehen beabstandet zum Stützelement (30) ist, um den Zylinderkern (24) von der Kupplung (40) zu entkoppeln.

13. Verriegelungsvorrichtung (100) nach einem der vorhergehenden Ansprüche,
**dadurch gekennzeichnet,**
**dass** ein Federelement (13) vorgesehen ist, um das Stützelement (30) federelastisch, insbesondere mit einer Federkraft (F) aus einer Rückzugsstellung (II) in eine Betriebsstellung (I) zu beaufschlagen.

## Claims

1. Locking device (100) for locking a functionally essential component (101), in particular a steering column or a gear shift lever, of a vehicle:
a housing (10), in which a locking cylinder (20) is accommodated, which serves to actuate a locking element (102) of the functionally essential component (101),
a support element (30) for supporting the locking cylinder (20) in the housing (10), wherein the support element (30) is mounted in the housing (10) in a rotationally fixed manner,
and a rotatable coupling (40), which can be brought into an operative connection with the locking element (102),
wherein the locking cylinder (20) has a rotatable cylinder core (24) which can be connected to the rotatable coupling (40),
and wherein the coupling (40) is axially supported on the support element (30),
**characterized in that**,
a mounting unit (M) is provided in order to fix the locking cylinder (20) in a predetermined mounting position (A) within the housing (10) at least positively to the support element (30).

2. Locking device (100) according to the preceding claim,
**characterized in that**
the mounting unit (M) is designed in the form of an overload protection (23) for the locking cylinder (20).

3. Locking device (100) according to one of the preceding claims,
**characterized in that**
an overload protection (23) is provided between the support element (30) and the locking cylinder (20) in order to displace the support element (30) with the coupling (40) in an axial direction away from the locking cylinder (20) in the event of a forced rotation of the locking cylinder (20) in the event of a break-in and to decouple the cylinder core (24) from the coupling (40).

4. Locking device (100) according to one of the preceding claims,
**characterized in that**
the mounting unit (M) has at least one first mounting means (M1) or a second mounting means (M2), in particular different from the first" which can be brought into mechanical operative connection with at least one corresponding first positioning means (P1) or a second positioning means (P2), in particular different from the first, on the locking cylinder (20) in only one predetermined orientation of the locking cylinder (20) .

5. Locking device (100) according to one of the preceding claims,
**characterized in that**
at least one first positioning means (P1) or a second positioning means (P2), in particular different from the first, is formed on the locking cylinder (20) in the form of one, preferably two, cams or grooves (21, 22) of different width or height or depth, in particular on an end face (E1) facing the coupling (40) or on a lateral surface (E3) of the locking cylinder (20).

6. Locking device (100) according to one of the preceding claims,
**characterized in that**
the mounting unit (M), in particular the overload protection (23), has at least one first mounting means (M1) or a second mounting means (M2), preferably different from the first, in the form of one, preferably two, grooves or cams (31, 32) of different widths or depths on a side (S1) of the support element (30) facing the locking cylinder (20).

7. Locking device (100) according to one of the preceding claims,
**characterized in that**
the support element (30) is in the form of a grooved disk or a cam disk.

8. Locking device (100) according to one of the preceding claims,
**characterized in that**
the mounting unit (M) has at least one first mounting means (M1) or a second mounting means (M2), in particular different from the first, in the form of one, preferably two, grooves or cams (11, 12) of different width, in particular axial, in the housing (10).

9. Locking device (100) according to one of the preceding claims,
**characterized in that**
the locking cylinder (20) has at least one first positioning means (P1) in the form of a connecting cam (25) on the cylinder core (24),
wherein, in particular, the mounting unit (M) has at least one first mounting means (M1) in the form of a groove (41) in the coupling (40).

10. Locking device (100) according to one of the preceding claims,
**characterized in that**
at least one first positioning means (P1) or a second positioning means (P2), in particular different from the first, on the locking cylinder (20) has at least one, preferably two differently aligned, lifting bevels (21a, 21b, 22a, 22b, 25a, 25b).

11. Locking device (100) according to one of the preceding claims,
**characterized in that**
at least one first mounting means (M1) or a second mounting means (M2) of the mounting unit (M), in particular different from the first, has at least one, preferably two differently aligned, lifting ramps (31a, 31b, 32a, 32b, 41a, 41b).

12. Locking device (100) according to one of the preceding claims,
**characterized in that**
the support element (30) is mounted in the housing (10) so as to be longitudinally displaceable between an operating position (I) and a retracted position (II),
wherein, in the operating position (I) of the support element (30), the locking cylinder (20) is fixed to the support element (30) by the mounting unit (M) in order to enable torque transmission between the cylinder core (24) and the coupling (40),
and in the retracted position (II) of the support element (30), the locking cylinder (20) is spaced apart from the support element (30) as viewed in an axial direction in order to decouple the cylinder core (24) from the coupling (40).

13. Locking device (100) according to one of the preceding claims,
**characterized in that**
a spring element (13) is provided in order to act on the support element (30) resiliently, in particular with a spring force (F) from a retracted position (II) into an operating position (I).

## Revendications

1. Dispositif de verrouillage (100) pour verrouiller un composant essentiel à la fonction (101), en particulier une colonne de direction ou un levier de changement de vitesse, d'un véhicule, présentant :
un boîtier (10) dans lequel est logé un cylindre de fermeture (20) qui sert à actionner un élément de verrouillage (102) du composant (101) essentiel à la fonction,
un élément de support (30) pour soutenir le cylindre de fermeture (20) dans le boîtier (10), l'élément de support (30) étant monté solidairement en rotation dans le boîtier (10), et un accouplement rotatif (40) qui peut être amené en liaison active avec l'élément de verrouillage (102),
dans lequel le cylindre de fermeture (20) comprend un noyau de cylindre rotatif (24) qui peut être relié à l'accouplement rotatif (40),
et dans lequel l'accouplement (40) est supporté axialement sur l'élément de support (30), **caractérisé en ce qu'**
une unité de montage (M) est prévue pour fixer le cylindre de fermeture (20) dans une position de montage (A) prédéfinie à l'intérieur du boîtier (10) au moins par complémentarité de forme sur l'élément de support (30),

2. Dispositif de verrouillage (100) selon la revendication précédente,
**caractérisé en ce que**
l'unité de montage (M) est réalisée sous la forme d'une sécurité de surcharge (23) pour le cylindre de fermeture (20).

3. Dispositif de verrouillage (100) selon l'une quelconque des revendications précédentes, **caractérisé en ce qu'**
une sécurité de surcharge (23) est prévue entre l'élément de support (30) et le cylindre de fermeture (20), afin de déplacer l'élément de support (30) avec l'accouplement (40) dans une direction axiale en s'éloignant du cylindre de fermeture (20) lors d'une rotation forcée du cylindre de fermeture (20) en cas d'effraction, et de découpler le noyau de cylindre (24) de l'accouplement (40).

4. Dispositif de verrouillage (100) selon l'une quelconque des revendications précédentes, **caractérisé en ce que**
l'unité de montage (M) présente au moins un premier moyen de montage (M1) ou un deuxième moyen de montage (M2), en particulier différent du premier,, qui peut être amené en liaison active mécanique dans seulement une orientation prédéfinie du cylindre de fermeture (20) avec au moins un premier moyen de positionnement (P1) correspondant ou un deuxième moyen de positionnement (P2), en particulier différent du premier, sur le cylindre de fermeture (20) .

5. Dispositif de verrouillage (100) selon l'une quelconque des revendications précédentes, **caractérisé en ce qu'**
au moins un premier moyen de positionnement (P1) ou un deuxième moyen de positionnement (P2), en particulier différent du premier, est réalisé sur le cylindre de fermeture (20) sous la forme d'une came ou d'une rainure (21, 22), de préférence de deux largeurs ou hauteurs ou profondeurs différentes, en particulier sur une face frontale (E1) tournée vers l'accouplement (40) ou sur une surface d'enveloppe (E3) du cylindre de fermeture (20).

6. Dispositif de verrouillage (100) selon l'une quelconque des revendications précédentes, **caractérisé en ce que**
l'unité de montage (M), en particulier la sécurité de surcharge (23), présente au moins un premier moyen de montage (M1) ou un deuxième moyen de montage (M2), de préférence différent du premier, sous la forme d'une, de préférence deux rainures ou cames (31, 32) de largeur ou de profondeur différentes, sur un côté (S1) de l'élément de support (30) tourné vers le cylindre de fermeture (20).

7. Dispositif de verrouillage (100) selon l'une quelconque des revendications précédentes, **caractérisé en ce que**
l'élément de support (30) est réalisé sous la forme d'un disque à rainures ou d'un disque à cames.

8. Dispositif de verrouillage (100) selon l'une quelconque des revendications précédentes, **caractérisé en ce que**
l'unité de montage (M) présente au moins un premier moyen de montage (M1) ou un deuxième moyen de montage (M2), en particulier différent du premier, sous la forme d'une, de préférence deux rainures ou cames (11, 12) de largeur différente, en particulier axiales, dans le boîtier (10),

9. Dispositif de verrouillage (100) selon l'une quelconque des revendications précédentes, **caractérisé en ce que**
le cylindre de fermeture (20) présente au moins un premier moyen de positionnement (P1) sous la forme d'une came de liaison (25) sur le noyau de cylindre (24),
dans lequel, en particulier, l'unité de montage (M) comprend au moins un premier moyen de montage (M1) sous la forme d'une rainure (41) dans l'accouplement (40).

10. Dispositif de verrouillage (100) selon l'une quelconque des revendications précédentes, **caractérisé en ce qu'**
au moins un premier moyen de positionnement (P1) ou un deuxième moyen de positionnement (P2), en particulier différent du premier, présente sur le cylindre de fermeture (20) au moins une, de préférence deux pentes de soulèvement (21a, 21b, 22a, 22b, 25a, 25b) orientées différemment.

11. Dispositif de verrouillage (100) selon l'une quelconque des revendications précédentes, **caractérisé en ce qu'**
au moins un premier moyen de montage (M1) ou un deuxième moyen de montage (M2), en particulier différent du premier, de l'unité de montage (M) présente au moins une, de préférence deux rampes de levage (31a, 31b, 32a, 32b, 41a, 41b) orientées différemment.

12. Dispositif de verrouillage (100) selon l'une quelconque des revendications précédentes, **caractérisé en ce que**
l'élément de support (30) est monté dans le boîtier (10) de manière à pouvoir se déplacer longitudinalement entre une position de fonctionnement (I) et une position de retrait (II),
dans lequel, dans la position de fonctionnement (I) de l'élément de support (30), le cylindre de fermeture (20) est fixé à l'élément de support (30) par l'unité de montage (M) afin de permettre une transmission de couple entre le noyau de cylindre (24) et l'accouplement (40),
et dans la position de retrait (II) de l'élément de support (30), le cylindre de fermeture (20) est espacé de l'élément de support (30), vu dans une direction axiale, afin de découpler le noyau de cylindre (24) de l'accouplement (40).

13. Dispositif de verrouillage (100) selon l'une quelconque des revendications précédentes, **caractérisé en ce qu'**
un élément de ressort (13) est prévu pour solliciter l'élément de support (30) de manière élastique, en particulier avec une force de ressort (F) d'une position de retrait (II) dans une position de fonctionnement (I).
